# EUROPEAN PATENT APPLICATION

(11) **EP 4 765 487 A2**
(43) Date of publication of application: **24.06.2026**
(21) Application number: 25222889.5
(22) Date of filing: 12.12.2025
(51) Int. Cl.: H01Q 1/32, H01Q 9/04, H01Q 19/00, H01Q 13/20

(54) **RADAR ANTENNA DEVICE AND RADAR ELEMENT THEREOF**

(30) Priority: 18.12.2024 TW 113149442
(71) Applicant: Arcadyan Technology Corporation, Hsinchu City 30071 (TW)
(72) Inventor: CHEN, You-Chu, 701 Tainan City (TW); CHAN, Yi-Chen, 325 Taoyuan City (TW); KUO, Shin-Lung, 820 Kaohsiung City (TW)
(74) Representative: Krauns, Christian

(57) **Abstract**

The application discloses a radar antenna device and a radar element thereof. The radar antenna device, configured for installation on a side surface of a vehicle, comprises: a base having a surface; a first antenna circuit board disposed on the surface; and a second antenna circuit board disposed on the surface. Wherein a first angle is formed between the first antenna circuit board and the side surface of the vehicle, and a second angle is formed between the second antenna circuit board and the side surface of the vehicle, and both the first angle and the second angle are greater than or equal to 15 degrees and less than or equal to 25 degrees.

## Description

### TECHNICAL FIELD

The present invention relates to a radar antenna device and a radar element thereof.

### BACKGROUND

To enhance driving safety, modern vehicles are equipped with systems such as blind spot detection, lane change assistance, adaptive cruise control, parking assistance, automatic braking, forward collision warning, and lane departure detection. These systems typically include a vehicle radar, which can accurately and reliably detect and locate surrounding objects under any environmental conditions.

Since the side detection radar for commercial vehicles (such as buses, trucks, lorries, etc.) requires a very wide detection range, it is preferable for it to cover at least a 180-degree detection area relative to the side surface of the vehicle. Due to the physical characteristics and limitations of conventional serial patch antennas, current serial patch antennas exhibit weak radiation energy at large angles. As a result, side detection radars must use two sets of systems positioned on the left and right sides relative to the normal direction of the vehicle's side plane.

To meet the demand for a streamlined vehicle exterior, the trend is toward a thinner design of the side detection radar.

### SUMMARY

The present invention relates to an antenna structure applicable to vehicle radar, particularly for side detection radar of commercial vehicles (such as buses, trucks, lorries, etc.), in order to achieve a thinner design of the side detection radar.

According to one embodiment, a radar antenna device is provided. The radar antenna device, configured for installation on a side surface of a vehicle, comprises: a base having a surface; a first antenna circuit board disposed on the surface; and a second antenna circuit board disposed on the surface. Wherein a first angle is formed between the first antenna circuit board and the side surface of the vehicle, and a second angle is formed between the second antenna circuit board and the side surface of the vehicle, and both the first angle and the second angle are greater than or equal to 15 degrees and less than or equal to 25 degrees.

According to another embodiment, a radar element is provided. The radar element comprises: a feed line; a plurality of radiation elements connected to the feed line and disposed on both sides of the feed line, wherein each of the plurality of radiation elements has a first length; and a plurality of parasitic elements disposed on both sides of the feed line and interleaved with the plurality of radiation elements, wherein each of the plurality of parasitic elements has a second length. Wherein the second length is different from the first length, and a minimum spacing between each of the plurality of parasitic elements and the feed line is equal to or less than 0.2 mm.

### BRIEF DESCRIPTION OF THE DRAWINGS

FIG. 1A illustrates a schematic view of an exemplary antenna circuit board according to one embodiment disclosed herein.
FIG. 1B illustrates a schematic view of a signal region of the antenna circuit board having a radar element according to one embodiment disclosed herein.
FIGS. 2A and 2B respectively illustrate a perspective view of a radar antenna device and a schematic view of antenna circuit boards along the X-axis according to one embodiment disclosed herein.
FIG. 2C illustrates an external view of the radar antenna device along the X-axis according to one embodiment disclosed herein.
FIG. 2D illustrates a bottom view of the radar antenna device along the Z-axis according to one embodiment disclosed herein.
FIG. 2E illustrates a perspective view of the radar antenna device according to one embodiment disclosed herein.
FIGS. 2F and 2G respectively illustrate a perspective view of another embodiment of a radar antenna device and a schematic view of the antenna circuit board along the X-axis according to one embodiment disclosed herein.
FIG. 3 illustrates an embodiment of the radar element according to one embodiment of the present application.
FIG. 4 illustrates a comparison diagram of radiation field patterns in the XZ plane between an antenna according to one embodiment of the present invention and a conventional antenna.
FIG. 5 illustrates a comparison diagram of radiation field patterns in the XZ plane between an antenna according to one embodiment of the present invention and a conventional antenna.
FIG. 6 illustrates a comparison diagram of radiation field patterns in the XZ plane between an antenna according to one embodiment of the present invention and a conventional antenna.
FIG. 7 illustrates a comparison diagram of radiation field patterns in the XZ plane between an antenna according to one embodiment of the present invention and a conventional antenna.
FIG. 8 illustrates a comparison diagram of radiation field patterns in the XZ plane between an antenna according to one embodiment of the present invention and a conventional antenna.
FIG. 9 illustrates a comparison diagram of radiation field patterns in the XZ plane of the antenna according to one embodiment of the present invention.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

Technical terms of the disclosure are based on general definition in the technical field of the disclosure. If the disclosure describes or explains one or some terms, definition of the terms is based on the description or explanation of the disclosure. Each of the disclosed embodiments has one or more technical features. In possible implementation, one skilled person in the art would selectively implement part or all technical features of any embodiment of the disclosure or selectively combine part or all technical features of the embodiments of the disclosure.

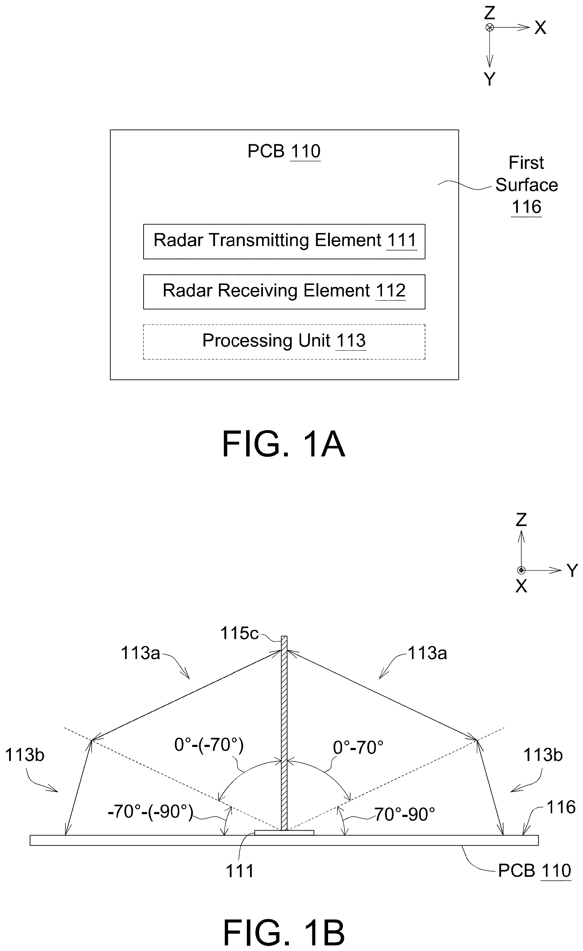

FIG. 1A illustrates a schematic diagram of an exemplary antenna circuit board 110 according to one embodiment disclosed herein. As shown in FIG. 1A, the antenna circuit board 110 (Antenna Printed Circuit Board) includes a radar transmitting element 111 and a radar receiving element 112. The radar transmitting element 111 and the radar receiving element 112 are disposed on a first surface 116 of the antenna circuit board 110. The radar transmitting element 111 on the antenna circuit board 110 may emit radar signals, and the radar receiving element 112 may receive radar signals reflected from objects to detect the presence of such objects. In the example shown in FIG. 1A, one radar transmitting element 111 and one radar receiving element 112 are disposed on the antenna circuit board 110, but the present disclosure is not limited thereto. In some embodiments, the antenna circuit board 110 may include multiple radar transmitting elements and multiple radar receiving elements, for example, two radar transmitting elements and four radar receiving elements, or designed in accordance with other requirements. The antenna circuit board 110 may further include a processing unit 113, which may be disposed on the first surface 116 of the antenna circuit board 110 or on another surface, depending on actual needs. The processing unit 113 may be electrically connected to the radar receiving element 112 and the radar transmitting element 111 to process the radar signals transmitted and received by the radar receiving element 112 and the radar transmitting element 111. According to the radar antenna radiation pattern, the transmitted signal intensity varies in different directions within a hemispherical region relative to the first surface 116 of the antenna circuit board 110. This will be explained in detail below with reference to FIG. 1B. Hereinafter, the radar transmitting element 111 and the radar receiving element 112 may also be collectively referred to as radar elements.

FIG. 1B illustrates a schematic diagram of the signal region of an exemplary antenna circuit board 110 having a radar transmitting element 111 according to one embodiment disclosed herein. In this embodiment, the radar antenna radiation pattern of the radar transmitting element 111 is designed to be directional, meaning that the signal transmission strength (gain) of the radar transmitting element 111 is stronger at specific angles. In this example, the signal transmission strength of the radar transmitting element 111 radiates from its center in the direction of a normal line 115c that is perpendicular to the first surface 116 of the antenna circuit board 110. The normal line 115c passes through the center of the radar transmitting element 111, and the gain in the direction of the normal line 115c is the maximum. Furthermore, in the example shown in FIG. 1B, the x-direction and y-direction may be interchangeable. According to Table 1 below, the region where the angle between the signal and the normal line 115c of the first surface 116 of the antenna circuit board 110 falls within the range of -70° to 0° and 0° to 70°, that is, a total field of view (FoV) of 140°, is defined as a first signal region 113a where the signal transmission strength is relatively strong (average gain ranging from 4.62 to 10.79 dB). The region where the angle between the signal and the normal line 115c of the first surface 116 of the antenna circuit board 110 falls within the range of 70° to 90° and -70° to -90° is defined as a second signal region 113b where the signal transmission strength is relatively weak (average gain ranging from -4.75 to -6.31 dB).

**Table 1: Relationship between antenna transmission signal strength (gain) and angle**

| | | | | | | |
|---|---|---|---|---|---|---|
| Angle Range | -70°~(-90°) | -50°~(-70°) | 0°~(-50°) | 0°~50° | 50°~70° | 70°~90° |
| Average Gain (dB) | -6.31 | 5.33 | 10.79 | 10.22 | 4.62 | -4.75 |

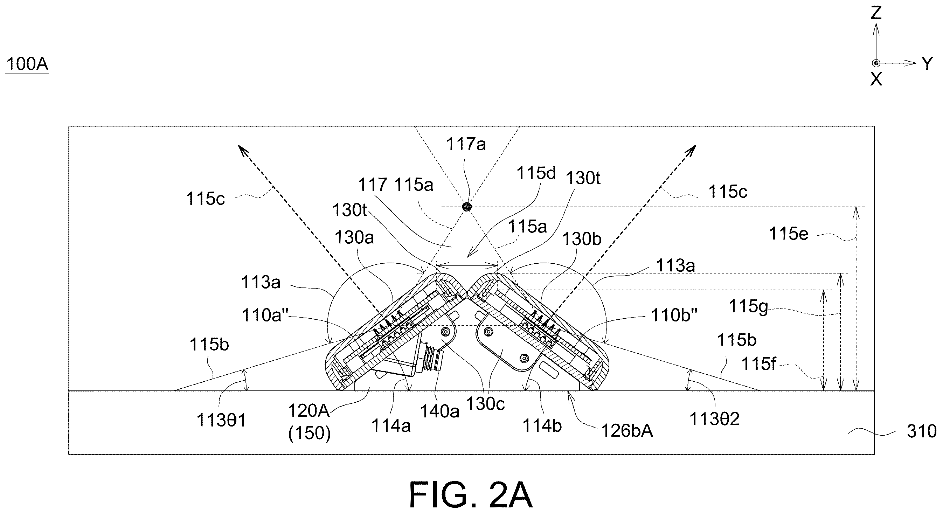

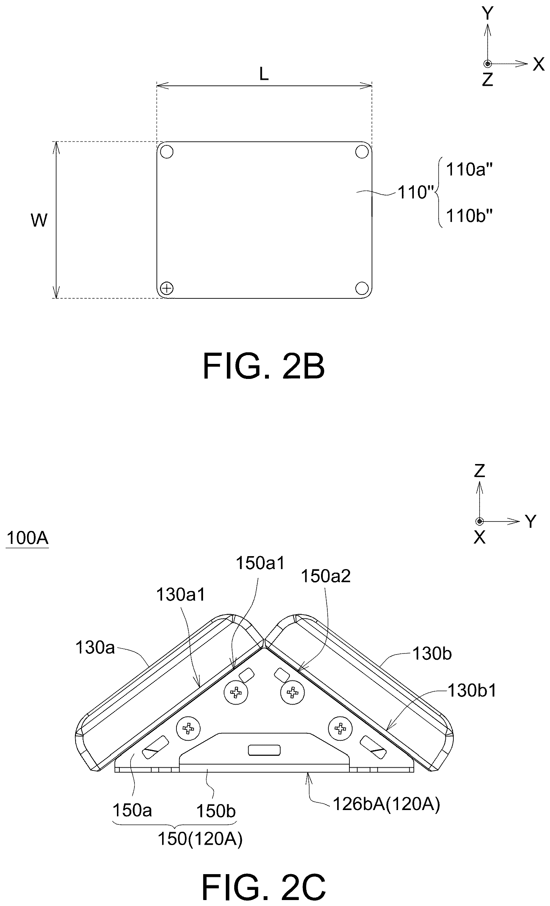

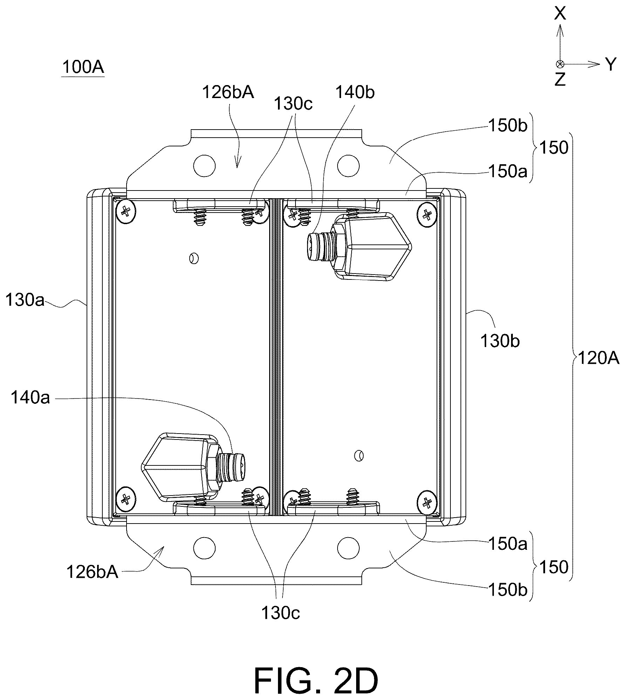

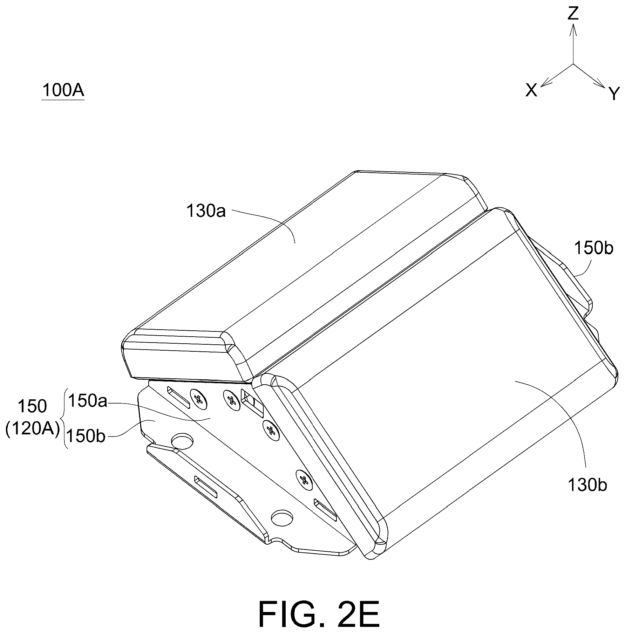

FIGS. 2A to 2E illustrate a radar antenna device 100A according to one embodiment disclosed herein. FIGS. 2A and 2B respectively illustrate a perspective view of the radar antenna device 100A along the X-axis and a schematic view of the antenna circuit boards 110". FIG. 2C illustrates an external view of the radar antenna device 100A along the X-axis. FIG. 2D illustrates a bottom view of the radar antenna device 100A along the Z-axis. FIG. 2E illustrates a perspective view of the radar antenna device 100A.

As shown in FIGS. 2A, 2B, and 2C, the antenna circuit boards 110a" and 110b" are respectively covered by a first housing 130a and a second housing 130b. The first housing 130a and the second housing 130b are transparent. The first housing 130a and the second housing 130b each include a plurality of connecting portions 130c, which are connected to the base 120A (as shown in FIG. 2C) and fixed to the side surface 290 of the vehicle. As shown in FIG. 2D, the base 120A includes two sets of brackets 150 respectively located on the side edges of the first housing 130a and the second housing 130b. Each set of brackets 150 includes an upper mounting bracket 150a and a lower mounting bracket 150b. The upper mounting bracket 150a is detachably connected to the connecting portion 130c, and the lower mounting bracket 150b is detachably connected to the side surface 290 of the vehicle. As shown in FIG. 2E, the upper mounting bracket 150a and the lower mounting bracket 150b are L-shaped.

As shown in FIG. 2A, the antenna circuit boards 110a" and 110b" are separated by the first housing 130a and the second housing 130b. The shortest first distance 115d between the antenna circuit boards 110a" and 110b" is between 10 mm and 30 mm, for example, 18.4 mm. This results in a second distance 115e between the vertex 117a of the detection blind spot 117 and the second surface 126bA of the base 120A being between 50 mm and 70 mm, for example, 61.7 mm. The vertical distance 115f between the highest points of the antenna circuit boards 110a and 110b and the second surface 126bA of the base 120A is between 30 mm and 40 mm, for example, 33.8 mm. The first housing 130a and the second housing 130b respectively have vertices 130t, whose maximum vertical distance from the second surface 126bA of the base 120A is between 30.1 mm and 50 mm, for example, between 40 mm and 50 mm (concerning the assembly height of the radar antenna device 100A). That is, in this design, the second distance 115e may be shortened to 61.7 mm (to reduce the detection blind spot), the vertical distance 115f may be shortened to 33.8 mm, and the vertical distance 115g may be reduced to 40 mm (to lower the assembly height of the radar antenna device 100A). In this example, the radar antenna device 100A further includes connectors 140a and 140b (as shown in FIG. 2D), which are respectively coupled to the antenna circuit boards 110a" and 110b" and can be used for electrically connecting to an external device (such as a control unit or processing unit) for transmitting signals, such as the detection signals of the radar antenna device 100A.

As shown in FIG. 2C, the upper mounting bracket 150a includes two inclined surfaces 150a1 and 150a2, which are respectively parallel to the bottom surface 130a1 of the first housing 130a and the bottom surface 130b1 of the second housing 130b. In one embodiment, the angles between the inclined surfaces 150a1 and 150a2 and the second surface 126bA of the base 120A determine a first angle 114a and a second angle 114b formed between the antenna circuit boards 110a" and 110b" and the second surface 126bA of the base 120A. Both the first angle 114a and the second angle 114b are greater than or equal to 15 degrees and less than or equal to 25 degrees. That is, the first angle and the second angle formed between the antenna circuit boards 110a" and 110b" and the side surface of the vehicle are both greater than or equal to 15 degrees and less than or equal to 25 degrees. In another embodiment, the surface of the vehicle on which the radar antenna device 100A is to be installed may not be flat or may not be perfectly perpendicular to the ground. Therefore, the upper mounting bracket 150a and the lower mounting bracket 150b may be adjusted in angle by means of connecting elements (not shown), such as screws, so that when the radar antenna device 100A is installed on the vehicle surface, the second surface 126bA of the base 120A can be made as perpendicular to the ground as possible and parallel to the traveling direction of the vehicle (such as the front or rear direction of the vehicle).

In addition, a triangular region formed by connecting the intersection point (which is the apex 117a) of the upper boundaries 115a of the two first signal regions 113a with the centers of the radar transmitting elements 111a and 111b constitutes a detection blind spot 117. The detection blind spot 117 is not located within the first signal region 113a and completely overlaps with the second signal region 113b, which has weaker signal strength. The detection blind spot 117 even includes areas with no signal at all.

The inclination angles 113θ1 and 113θ2 between the lower boundaries 115b of the two first signal regions 113a and the side surface 290 of the vehicle are between 15 degrees and 25 degrees, for example, 20 degrees.

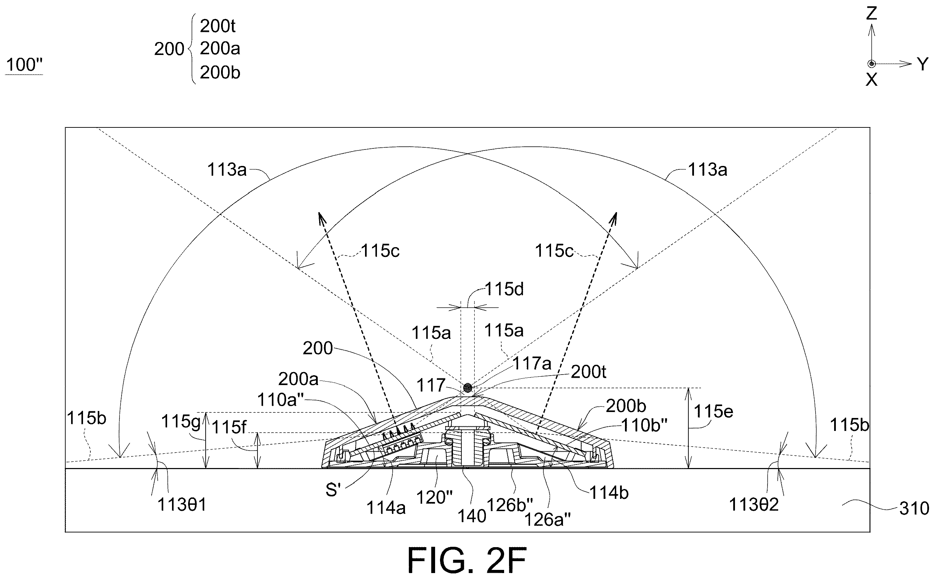

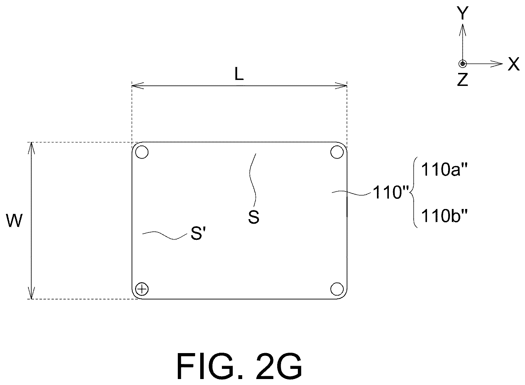

FIGS. 2F and 2G respectively illustrate a perspective view of a radar antenna device 100" along the X-axis and a schematic view of an antenna circuit board 110' according to one embodiment disclosed herein. The difference between the radar antenna device 100" and the radar antenna device 100A lies in the size of the antenna circuit board 110" (which may represent both antenna circuit boards 110a" and 110b", as shown in FIG. 2G), which differs from the antenna circuit boards 110 of the radar antenna device 100. The antenna circuit board 110" is rectangular and has a long side S and a short side S', wherein the length of the short side S' is smaller than that of the long side S. In one embodiment, the length L of the long side S of the antenna circuit board 110" is between 44 mm and 66 mm (for example, but not limited to, 66 mm), and the width W of the short side S' is between 30 mm and 50 mm (for example, but not limited to, 39.2 mm). Since the antenna circuit boards 110a" and 110b" are oriented such that the long side S is parallel to the second surface 126b" of the base 120", and the short side S' forms a first angle 114a and a second angle 114b with the second surface 126b" of the base 120" (for example, but not limited to, 20 degrees), the second distance 115e between the vertex 117a of the detection blind spot 117 and the second surface 126b" of the base 120" is shortened to between 30 mm and 50 mm, for example, but not limited to, 26.9 mm. The vertical distance 115f between the highest points of the antenna circuit boards 110a" and 110b" and the second surface 126b" of the base 120" is reduced to below 30 mm, for example, but not limited to, 12 mm, such that the top surface 200t of the housing 200 (the housing 200 includes shell surfaces 200a, 200b, and a top surface 200t located between shell surfaces 200a and 200b) has its shortest vertical distance 115g from the vehicle side surface 310 reduced to between 27.7 mm and 47.6 mm (for example, but not limited to, 18.7 mm) (relating to the assembly height of the radar antenna device 100"). In this example, the radar antenna device 100" further includes a waterproof outlet feature 140, which can be used to electrically connect to an external device (such as a control unit or processing unit) for transmitting signals, such as detection signals from the radar antenna device.

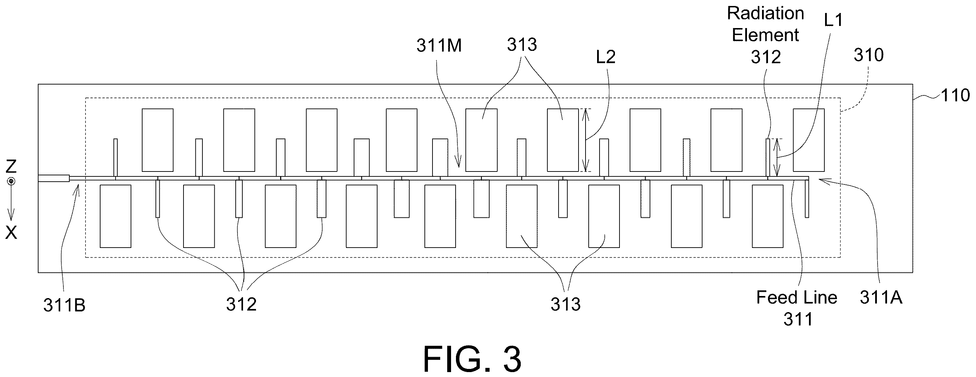

FIG. 3 illustrates an embodiment of a radar element 310 according to one embodiment of the present application. As shown in FIG. 3, the radar element 310 according to this embodiment is implemented, for example but not limited to, as a serial antenna unit. The radar element 310 may be used to implement the radar transmitting element 111 and the radar receiving element 112. The radar element 310 includes: a feed line 311, a plurality of radiation elements 312, and a plurality of parasitic elements 313. The radar element 310 is formed on the antenna circuit board 110 (such as the first antenna circuit board 110a" or the second antenna circuit board 110b"). In one possible embodiment, the antenna circuit board 110 is made of a composite material containing Teflon suitable for millimeter-wave high-frequency use. However, the material of the antenna circuit board 110 is not limited to this; any material suitable for use as an antenna circuit board is applicable in the present invention.

The feed line 311 receives current transmitted from a millimeter-wave IC via a high-frequency coplanar waveguide and a microstrip line, and distributes the current to the plurality of radiation elements 312, so that the radiation elements 312 can synchronously emit electromagnetic waves.

The plurality of radiation elements 312 are connected to the feed line 311 and are arranged on both sides of the feed line 311. Each of the radiation elements 312 has a first length L1. The radiation elements 312 are arranged at intervals along the Y-axis direction on both the positive and negative X-axis sides of the feed line 311. That is, some of the radiation elements 312 are located on the positive X-axis side and the rest on the negative X-axis side. For example but not limited to, the positive and negative X-axis sides of the feed line 311 may each have 2 to 10 radiation elements 312, with an equal number of radiation elements 312 on each side. The radiation elements 312 may be, but are not limited to, rectangular (i.e., patch-shaped). Additionally, as shown in FIG. 3, in this embodiment, the widths of the radiation elements 312 decrease sequentially from the middle 311M of the feed line 311 toward both ends 311A and 311B of the feed line 311. In other words, in another possible embodiment, the widths of the radiation elements 312 decrease in order from the middle of the feed line 311 toward both ends.

The plurality of parasitic elements 313 are arranged on both sides of the feed line 311 and are interleaved with the plurality of radiation elements 312. Each parasitic element 313 has a second length L2, which is different from the first length L1 of the radiation elements 312. Furthermore, the second length L2 is less than 2.2 mm and greater than the first length L1. In one embodiment, the parasitic elements 313 are arranged at intervals on both sides of the feed line 311, with one parasitic element 313 placed between every two adjacent radiation elements 312. In one possible embodiment, the second length L2 of the parasitic elements 313 is less than or equal to 2.2 mm, and the width of the parasitic elements 313 is not specifically limited. The distance between each parasitic element 313 and the feed line 311 is equal to or less than 0.2 mm. In one embodiment, the minimum spacing between each of the parasitic elements 313 and the feed line 311 is equal to or less than 0.2 mm, meaning that the parasitic elements 313 are not connected to the feed line 311 and are electrically isolated or open-circuited relative to it.

In addition, regarding the arrangement between the parasitic elements 313 and the radiation elements 312, for example but not limited to, the radiation elements 312 on one side (upper or lower) of the feed line 311 are aligned with the parasitic elements 313 on the opposite side of the feed line 311. Here, "aligned" is not limited to precise alignment. In one possible embodiment, the centers of the radiation elements 312 on one side of the feed line 311 are aligned with the centers of the parasitic elements 313 on the opposite side of the feed line 311. That is, each of the radiation elements 312 on one side of the feed line 311 is aligned with one of the parasitic elements 313 on the other side.

From the above, it can be seen that, in this embodiment, a combination of comb-shaped radiation elements and a feed line is used to change the polarization direction of radiation, thereby enabling a single-layer feed structure to be maintained while also allowing parasitic elements to be placed between the radiation units.

The following describes, with reference to the drawings, a comparison of the radiation field patterns between the antenna (radar element) of one embodiment of the present invention and conventional antennas.

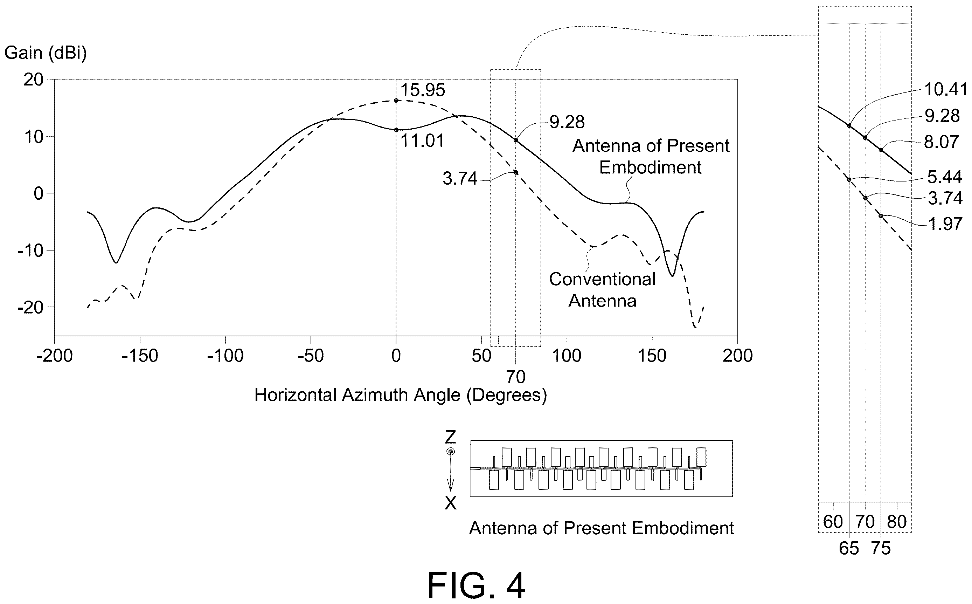

FIG. 4 illustrates a comparison diagram of the radiation field pattern in the XZ plane between an antenna of one embodiment of the present invention and a conventional antenna. The X-axis represents the azimuth angle in degrees; the Y-axis represents the gain in dBi. The maximum gain appears at an azimuth angle of 0 degrees. The waveform passing through the 0-degree direction is the main lobe, and the two adjacent waveforms on either side are side lobes. One side lobe is on the negative angular direction, and the other is on the positive angular direction. As shown in FIG. 4, although the gain at the front-facing normal direction (i.e., 0 degrees) decreases by 5 dB, the gain at a large angle (70 degrees) increases by 5.5 dB. Therefore, it can be seen that the antenna of this embodiment greatly improves object detection performance at large angles. Moreover, the total antenna length of this embodiment is nearly identical to that of the conventional antenna.

From FIG. 4, it can be seen that in this embodiment, the minimum angle between the antenna circuit board surface and the vehicle body is 15 degrees, corresponding to a maximum radiation beam angle of 75 degrees; and the maximum angle between the antenna circuit board surface and the vehicle body is 25 degrees, corresponding to a radiation beam angle of 65 degrees. As shown in FIG. 4, the gain of the antenna in this embodiment within the angular range of 65 degrees to 75 degrees is, on average, approximately 6 dB higher than that of the conventional antenna in the same range. According to the radar range equation, assuming all other conditions remain unchanged, the detection distance of the antenna in this embodiment becomes 1.4 times that of the conventional antenna. Hence, it is clear that the antenna of this embodiment provides a significant improvement in detecting objects at large angles.

Furthermore, in FIG. 4, taking the example where each side (upper and lower) of the feed line in the radar element includes nine radiation elements and nine parasitic elements, it demonstrates that this embodiment satisfies the energy detection requirements. In addition, to ensure consistent polarization direction between the radar receiving element and the radar element, the parasitic elements are standard rectangles. This is because, if the parasitic elements were non-standard rectangles, the parasitic elements could interfere with the spacing between radar receiving elements or result in inconsistent polarization directions between the radar receiving elements and the radar element. Also, in FIG. 4, although the gain in the front-facing normal direction (0°) decreases by 5 dB, it still maintains a level of 11 dBi. Likewise, the gain at the large angle of 70° increases by 5.5 dB to reach 9.28 dBi. The energy difference between these two directions (0° and 70°) is only about 2 dB. This indicates that the radar element of this embodiment is highly beneficial for large-angle detection. Moreover, the total antenna length of the radar element in this embodiment is almost the same as that of the conventional antenna.

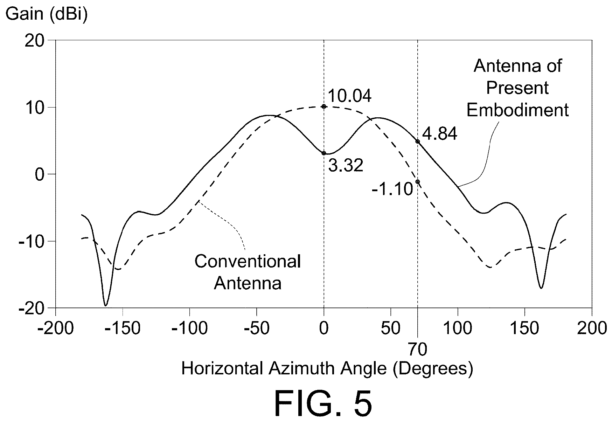

FIG. 5 illustrates a comparison diagram of the radiation field pattern in the XZ plane between an antenna of one embodiment of the present invention and a conventional antenna. From the gain at the 0-degree direction, it can be observed that although the energy of the antenna in this embodiment is attenuated in the 0-degree direction, the gain at large angles is significantly improved. This demonstrates that the antenna of this embodiment can be adjusted through design to enhance energy at necessary large angles, while keeping the energy attenuation in the 0-degree direction within an acceptable range.

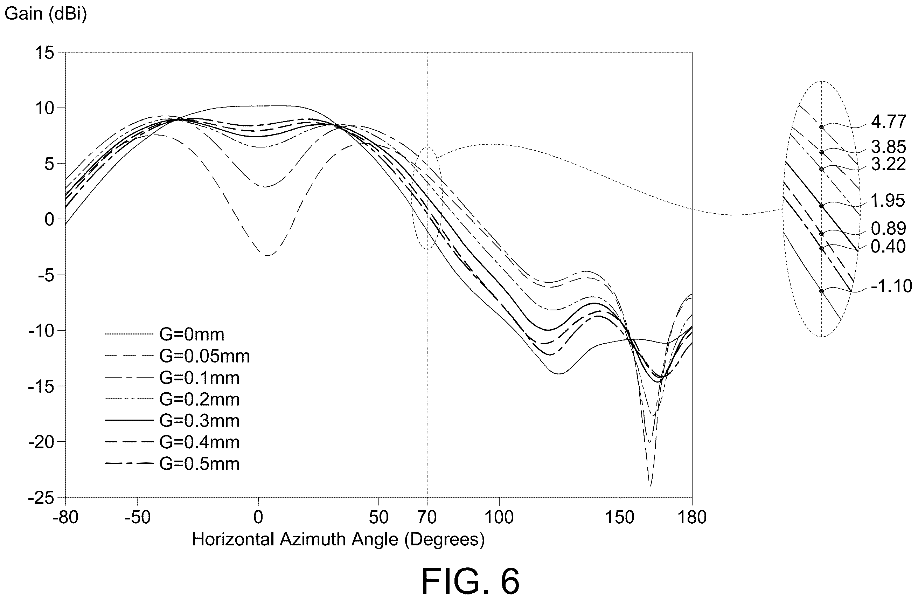

FIG. 6 illustrates a comparison diagram of the radiation field pattern in the XZ plane between an antenna of one embodiment of the present invention and a conventional antenna. As seen in FIG. 6, adjusting the distance G between the parasitic elements 313 and the feed line 311 results in different gains. From FIG. 6, when the distance G is set to 0.2 mm, energy at large angles can be effectively enhanced within a certain range. However, when the distance exceeds 0.2 mm, the improvement becomes negligible. Therefore, in this embodiment, the distance G between the parasitic elements 313 and the feed line 311 is set to be less than or equal to 0.2 mm. Within this distance range, the energy at 0 degrees remains acceptable.

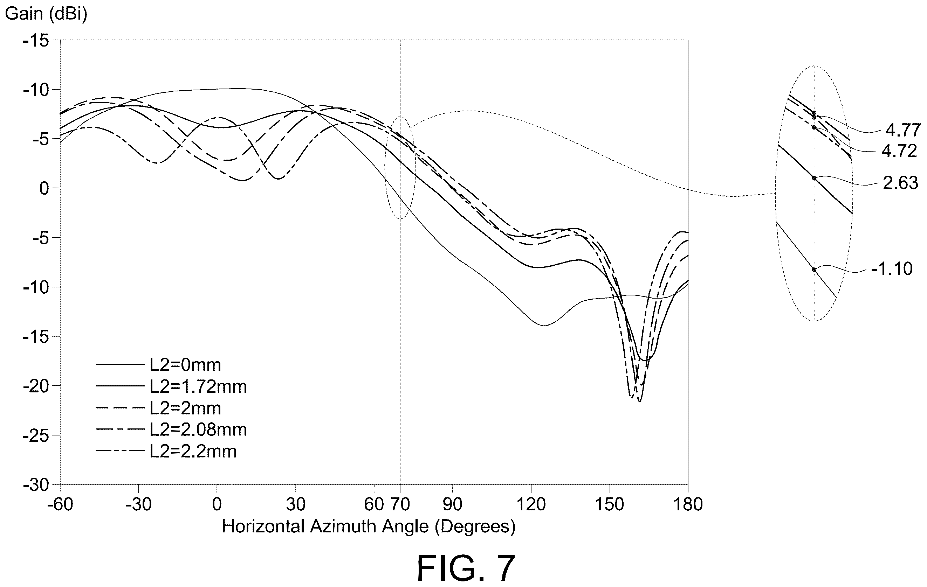

FIG. 7 illustrates a comparison diagram of the radiation field pattern in the XZ plane between an antenna of one embodiment of the present invention and a conventional antenna. As seen in FIG. 7, in this embodiment, the longer the length L2 of the parasitic elements 313, the better the enhancement of energy at large angles. However, when the length L2 of the parasitic elements 313 equals or exceeds 2.2 mm, two nulls (null points) appear in the energy pattern at large angles. This indicates the occurrence of higher-order mode resonance, which should be avoided. Therefore, in this embodiment, the length L2 of the parasitic elements 313 is set to be equal to or less than 2.2 mm. Within this length range, the energy at 0 degrees remains acceptable.

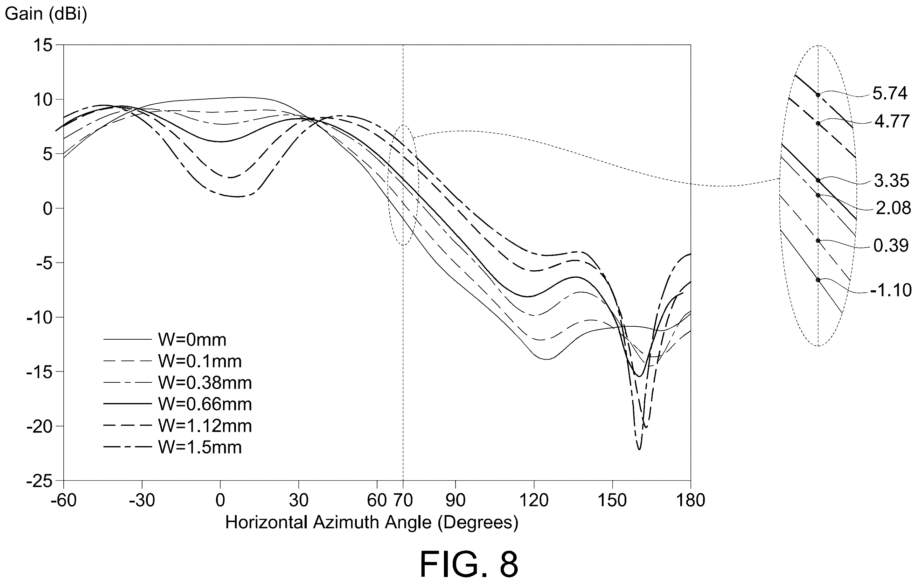

FIG. 8 illustrates a comparison diagram of the radiation field pattern in the XZ plane between an antenna of one embodiment of the present invention and a conventional antenna. As seen in FIG. 8, in the antenna of this embodiment, when the width W of the parasitic elements is set from 0.1 mm to 1.5 mm, the energy at both 0 degrees and large angles changes (in a nearly linear manner). Therefore, in this embodiment, there is no specific limitation on the width W of the parasitic elements.

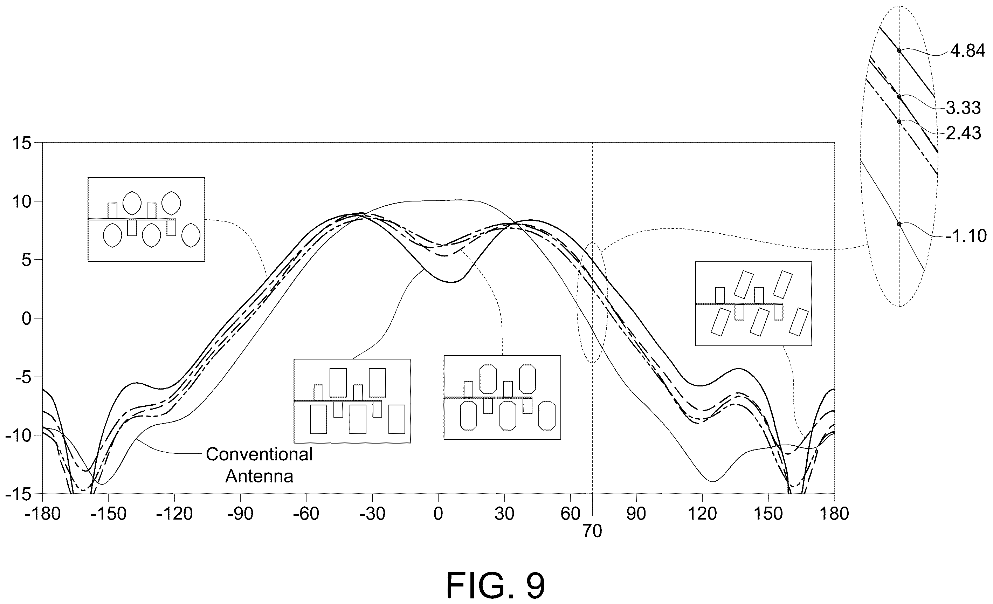

FIG. 9 illustrates a comparison diagram of the radiation field pattern in the XZ plane of an antenna of one embodiment of the present invention.

In FIG. 9, the example includes two parasitic elements on one side and three on the other side of the feed line, but this should not be construed as limiting the invention. Additionally, to demonstrate the gain variation of the radar element in this embodiment, various shapes of parasitic elements are compared in FIG. 9, including but not limited to: standard rectangles, polygons, ellipses, slanted rectangles (with placement direction differing from the antenna polarization direction), or combinations thereof. As shown in FIG. 9, at an angle of 70 degrees, the radar elements with different-shaped parasitic elements all achieve at least a 3 dB gain improvement. In practice, in other possible embodiments of the present application, the shape of the parasitic elements is not specifically restricted. The number of parasitic elements and radiation elements is also not limited to the example of two or nine pairs given herein. That is, the quantity of antenna array units is not confined to the examples of 2×2 or 2×9 given above. Any other quantity also falls within the technical implementation scope of this invention.

In one possible embodiment of the present application, the material of the mechanical housing may include, but is not limited to, a mixture of polybutylene terephthalate (also known as PBT plastic) and glass fiber, wherein the weight ratio of the glass fiber is between 25% and 35%. Other suitable materials are also applicable, and the present application is not limited thereto.

In another possible embodiment of the present application, the material of the antenna circuit board of the radar antenna device is a composite material containing Teflon suitable for millimeter-wave high-frequency applications, for example but not limited to, the RO3003 series, due to its superior radiation characteristics. However, other suitable materials are also applicable, and the present application is not limited thereto.

From the above, it can be understood that in this embodiment of the present application, because the angle between the antenna circuit board of the radar element and the side plane of the vehicle is greater than or equal to 15 degrees and less than or equal to 25 degrees, the goal of thinning the radar antenna device can be achieved, thereby meeting the required design criteria.

In addition, in this embodiment of the present application, because the angle between the antenna circuit board of the radar element and the vehicle side plane is greater than or equal to 15 degrees and less than or equal to 25 degrees, the gain of the antenna in the angular range of 65 degrees to 75 degrees is improved, and the detection distance of the antenna can be increased. Therefore, the antenna of this embodiment provides a significant enhancement in detecting objects at large angles.

Although this application may describe many specific details, these should not be construed as limiting the scope of the claimed invention, but rather as a description of specific features of particular embodiments. In this specification, certain features described in the context of a single embodiment may also be implemented in combination in a single embodiment. Conversely, various features described in the context of a single embodiment may also be implemented separately or in any suitable sub-combination in multiple embodiments.

Moreover, although features may initially be described as functioning in certain combinations or as being described as such combinations, in some cases, one or more features may be removed from the combination, and the described combination may be directed to a sub-combination or a variation of a sub-combination.

Likewise, although the operations are depicted in the drawings in a particular order, this should not be interpreted as requiring that such operations be performed in the specific illustrated order or sequence, or that all illustrated operations must be performed to achieve the desired result.

Although the above-described embodiments of the present application disclose certain examples and implementations, changes, modifications, and enhancements may be made to the described examples and implementations, as well as to other implementations, based on the disclosed content.

## Claims

1. A radar antenna device (100A, 100"), configured for installation on a side surface (290) of a vehicle, comprising:
a base (120A, 120") having a surface (116);
a first antenna circuit board (110, 110a, 110b, 110a", 110b", 110') disposed on the surface; and
a second antenna circuit board (110, 110a, 110b, 110a", 110b", 110') disposed on the surface,
wherein a first angle (113θ1, 113θ2) is formed between the first antenna circuit board and the side surface of the vehicle, and a second angle (113θ1, 11302) is formed between the second antenna circuit board and the side surface of the vehicle, and both the first angle and the second angle are greater than or equal to 15 degrees and less than or equal to 25 degrees.

2. The radar antenna device according to claim 1, further comprising a radar element (310) formed on the first antenna circuit board or the second antenna circuit board, the radar element comprising:
a feed line (311);
a plurality of radiation elements (312) connected to the feed line and disposed on both sides of the feed line, wherein each of the plurality of radiation elements has a first length; and
a plurality of parasitic elements (313) disposed on both sides of the feed line and interleaved with the plurality of radiation elements, wherein each of the plurality of parasitic elements has a second length,
wherein the second length is different from the first length, and a minimum spacing between each of the plurality of parasitic elements and the feed line is equal to or less than 0.2 mm.

3. The radar antenna device according to claim 2, wherein the second length is less than or equal to 2.2 mm and greater than the first length.

4. The radar antenna device according to claim 2 or 3, wherein each of the plurality of radiation elements on either side of the feed line is aligned with one of the plurality of parasitic elements on an opposite side of the feed line.

5. The radar antenna device according to anyone of the claims 2 to 4, wherein each of the plurality of parasitic elements is electrically insulated from the feed line.

6. A radar element (310) comprising:
a feed line (311);
a plurality of radiation elements (312) connected to the feed line and disposed on both sides of the feed line, wherein each of the plurality of radiation elements has a first length; and
a plurality of parasitic elements (313) disposed on both sides of the feed line and interleaved with the plurality of radiation elements, wherein each of the plurality of parasitic elements has a second length,
wherein the second length is different from the first length, and a minimum spacing between each of the plurality of parasitic elements and the feed line is equal to or less than 0.2 mm.

7. The radar element according to claim 6, wherein the second length is less than or equal to 2.2 mm and greater than the first length.

8. The radar element according to claim 6 or 7, wherein each of the plurality of radiation elements has a width, and the widths of the radiation elements decrease sequentially from a middle of the feed line toward both ends of the feed line.

9. The radar element according to anyone of the claims 6 to 8, wherein each of the plurality of radiation elements on either side of the feed line is aligned with one of the plurality of parasitic elements on an opposite side of the feed line.

10. The radar element according to anyone of the claims 6 to 9, wherein the plurality of parasitic elements have shapes selected from a group consisting of: standard rectangle, polygon, ellipse, slanted rectangle, or combinations thereof.

11. The radar element according to anyone of the claims 6 to 10, wherein each of the plurality of parasitic elements is electrically insulated from the feed line.
